# EUROPÄISCHE PATENTSCHRIFT

(11) **EP 1 138 871 B1**
(45) Veröffentlichungstag und Bekanntmachung des Hinweises auf die Patenterteilung: **19.07.2006**
(21) Anmeldenummer: 01810268.1
(22) Anmeldetag: 19.03.2001
(51) Int. Cl.: E21B 10/44

(54) **Wendelbohrer**
Twist drill
Foret hélicoidal

(30) Priorität: 27.03.2000 DE 10015203
(43) Veröffentlichungstag der Anmeldung: 04.10.2001
(73) Patentinhaber: HILTI Aktiengesellschaft, 9494 Schaan (LI)
(72) Erfinder: Obermeier, Josef, 86971 Peiting (DE)
(74) Vertreter: Wildi, Roland

(56) Entgegenhaltungen:
- EP-A- 0 352 215
- DE-A- 3 826 239
- DE-U- 29 724 063
- GB-A- 183 005
- US-A- 5 160 232
- US-A- 5 873 683
- DATABASE WPI Section PQ, Week 198244 Derwent Publications Ltd., London, GB; Class P54, AN 1982-P4326E XP002166465 -& SU 891 250 A (LENINGRAD PREC MECH OPTI) , 28. Dezember 1981 (1981-12-28)

## Beschreibung

Die Erfindung bezeichnet einen Wendelbohrer, welcher als Bohrwerkzeug in ein drehendes und optional schlagendes Werkzeuggerät eingesetzt wird, vorteilhaft ausgebildet für den schlagend abrasiven Abtrag von Gestein oder gesteinähnlichem Material, wie Beton.

Wendelbohrer mit einem innerhalb des Schafts wendelförmig ausgebildeten Wendel zum durch die Drehung des Wendelbohrers vermitteltem Abtransport des abrasiv abgetragenen Materials sind üblich. Der Wendel weist meist mehrere Wendelgänge mit den zugeordneten Nuten auf, in welchen entlang das am Bohrkopf abrasiv abgetragene Material abtransportiert wird.

Derartige Wendelbohrer sind bspw. aus der EP0653544B1 vorbekannt, welche als Wendel zwei gleichartige, mit konstanter Steigung verlaufende, Wendelgänge offenbart, die sich jeweils an eine der beiden Schneidkanten des Bohrkopfes anschliessen. Des weiteren weist dieser Wendelbohrer an der radial äusseren Kante der Wendelgänge, welche bei der Drehung mit ihrer Hüllkurve einen Zylinder etwa des Bohrdurchmessers ausbilden, eine treppenförmige Verzahnung auf, die radial fräsend wirkt. Zur Erzielung eines grösstmöglichen Nutquerschnitts ist die Nut bis an den Bohrerkern heran eckig ausgeführt.

Bei Bohrwerkzeugen kleinen Durchmessers und leistungsfähigen Werkzeuggeräten kommt es oftmals zu Verklumpungen des abrasiv abgetragenen Materials und in dessen Folge zu einem Verstopfen der Nut, bis es schliesslich zu einem Klemmen des Bohrwerkzeugs oder einem schlagartigen Entweichen des verstopfenden Materials kommt. Dieses zu verhindern bedient sich die EP339412A2 längs der Wendel einer wechselnden Steigung sowie zusätzlicher stufenartiger Seitenflächen der Wendelgänge, welche in die Nut hineinragen. Die überwiegend axial und anders orientierten Flächenbereiche führen, vermittelt durch die schlagende Beanspruchung des Bohrwerkzeugs, zu einer wechselnden Beschleunigung des abtransportierten Materials und damit zu einer Verwirbelung innerhalb der Nut, die einer Verklumpung entgegenwirkt. Nachteilig bei einer derartigen Ausbildung der Seitenflächen der Wendelgänge ist die dadurch nahe der Hüllkurve gegebene Verzahnung der drehenden Wendelgänge, welche bei dem freiliegenden Bereich des Wendels eine hohe Verletzungsgefahr und bei dem im Bohrloch befindlichen Bereich zu einer unbeabsichtigten Ausfräsung des Bohrlochs führen kann. Zudem bereitet die Fertigung einer derartigen Kontur an den Seitenflächen der Wendelgänge Nachteile, da diese speziell geprägt werden müsste.

Aus der DE3919095A1 ist ein Wendelbohrer für Gestein bekannt, welcher im Schaft verankerte, radial orientierte, Bürsteneinsätze zum Reinigen des Bohrlochs aufweist. Die Bürsteneinsätze bilden entweder in ihrer Anordnung zueinander eine Art unterbrochenen Wendelgang aus oder sind im Grund der durch einen Wendelgang gebildeten Nut angeordnet. Funktionsbedingt erstrecken sich diese Bürsteneinsätze radial stets bis zu der durch die Drehung ausgebildeten Hüllkurve. Nachteilig bei derartigen filigranen Bürsteneinsätzen aus anderem Material ist ihre geringe Lebensdauer, gerade im rauen Einsatz im Bauhauptgewerbe. Die innerhalb der Nut angeordneten Bürsteneinsätze vermindern durch ihre radiale Erstreckung bis zur Hüllkurve zudem wesentlich den eigentlich zum Abtransport verfügbaren Nutquerschnitt.

Nach der US5160232 weist ein Wendelbohrer für Metall zur Verminderung der Gleitreibung von Spänen innerhalb der Wendelnut eine Vielzahl längs ununterbrochener Leitrippen auf.

Nach der US5873683 weist ein wendelfreier Metallbohrer im Bohrkopf einen direkt an der Schneide angeordneten, den Verschleiss durch Spanformung vermindernden, Verschleissschutzkörper mit mehreren Querrippen in Form eines Hartstoffeinsatzes auf.

Nach der SU891250 weist ein Wendelbohrer für Metall eine Vielzahl quer über die gesamte Wendelnut verlaufende Erhöhungen auf, die eine gleitreibungsarme Führung des Spanes in der Wendelnut ermöglichen.

Die Aufgabe der Erfindung besteht unter Vermeidung obiger Nachteile in der Realisierung eines langlebigen, gefahrlos verwendbaren Wendelbohrers, der einer Verklumpung des abrasiv abgetragenen Materials in der Nut entgegenwirkt.

Die Aufgabe wird im wesentlichen durch die Merkmale der unabhängigen Ansprüche gelöst. Vorteilhafte Weiterbildungen ergeben sich aus den Unteransprüchen.

Im wesentlichen sind in der durch den Wendelgang ausgebildeten Nut längs dieser angeordnete einzelne radiale Noppen ausgebildet, die ohne die Hüllkurve zu erreichen teilweise in den Nutquerschnitt eindringen. Durch die bei schlagender Beanspruchung des Bohrwerkzeuges auftretenden longitudinalen Stosswellen wird das über die Nut abtransportierte, abrasiv abgetragene Material von den axial orientierten Flächenbereichen der in den Nutquerschnitt hineinragenden Noppen wechselnd beschleunigt, worauf es zu einer Verwirbelung des staubförmigen Materials kommt, welcher einer Verklumpung entgegenwirkt. Bereits gebildete Klumpen werden umfänglich beschleunigt in Wechseldrall versetzt und somit vermittelt durch ihre Massenträgheit auseinander gebrochen.

Eine versetzte Anordnung bzw. unterschiedliche Grössen oder Abstände der Noppen wechselwirken mit verschiedenen grossen Verklumpungen in unterschiedlichen Bereichen der Nut.

Die im Grund der Nut ausgebildeten Noppen werden durch die sie beidseitig umgebenden, im radialen Äusseren glatten, Wendelgänge bei zweckentsprechender drehender Nutzung des Wendelbohrers vor unbeabsichtigten Berührungen geometrisch geschützt, wodurch eine fräsende Wirkung am Bohrlochrand oder eine Gefährdung des Nutzers ausgeschlossen ist.

Die nur teilweise radiale Erstreckung der Noppen vermindert den zum Abtransport verfügbaren Nutquerschnitt nur unwesentlich.

Die Noppen, welche vorteilhaft aus dem selben Material wie der Bohrerkern des Wendelbohrers bestehen, sind kompakt ausgeführt und beeinträchtigen die Lebensdauer des Bohrwerkzeuges in keinster Weise.

Die Erfindung wird nachfolgend an einem Ausführungsbeispiel näher erläutert mit
Fig. 1 als einem Wendelbohrer
Fig. 2 als Ausschnitt aus Fig. 1

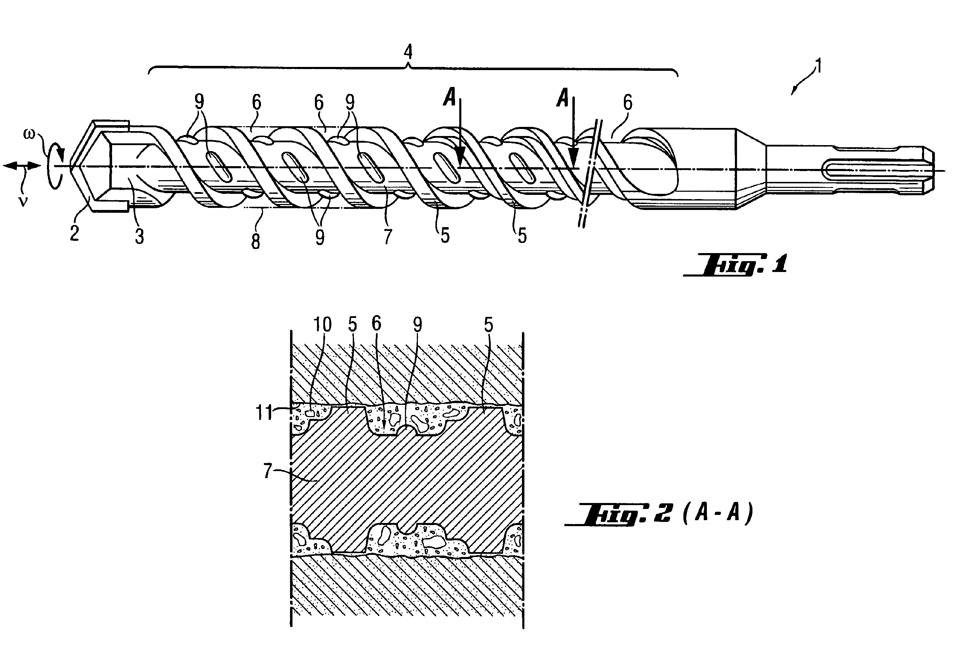

Nach Fig. 1 bzw. dem axial geschnittenen Ausschnitt A - A in Fig. 2 weist ein Wendelbohrer 1 mit einem mit Schneiden 2 ausgestatteten Bohrkopf 3 einen sich daran axial anschliessenden wendelförmigen Wendel 4 mit zumindest einem wendelförmigen Wendelgang 5 auf, zwischen welchem sich eine Nut 6 bis hinein zu einem Bohrerkern 7 ausbildet. Die radial äussere Fläche des Wendelgangs 5 beschreibt bei einer Drehung ω eine zylindrische Hüllkurve 8 um die Drehachse. Am den Bohrerkern 7 bestimmenden Grund der Nut 6 sind, vorzugsweise mittig längs der Nut 6 verlaufende, eine Vielzahl einzelner Noppen 9 angeordnet, welche radial nach Aussen in die Nut 6 hineinragen ohne die Hüllkurve 8 zu erreichen. Diese einzelnen Noppen 9 sind vorzugsweise prismatisch kompakt ausgeformt mit einer radialen Höhe von 1/10 bis 1/2, vorzugsweise 1/4, der Nuttiefe, einer quer zum Wendelgang orientierten Breite von 1/10 bis 1/2, vorzugsweise 1/4, der Nutbreite sowie einer längs zum Wendelgang 5 orientierten Länge von 1/10 bis einem Doppelten, vorzugsweise einem Ganzen, der Nutbreite, wobei die einzelnen Noppen 9 zueinander im wesentlichen längs der Nut 6 unter einem Abstand von 1/10 bis der vierfachen Nutbreite, vorteilhaft gleich der Länge, entlang einer Linie oder jeweils versetzt dazu angeordnet sind und vorzugsweise die selbe Grösse haben. Die einzelnen Noppen 9 bewirken mit ihren im wesentlichen axial orientierten Längsflächen, vermittelt über die axiale Stosszahl bzw. Schwingung v, eine Beschleunigung auf ein innerhalb der Nut 6 vom Wendel 6 abtransportiertes, abrasiv abgetragenes, Material 10 und vermeiden somit eine durch Verklumpung verursachte Verstopfung des Wendelbohrers 1 in einem Bohrloch 11.

## Patentansprüche

1. Wendelbohrer (1) für Gestein mit einem Wendel (4) mit wenigstens einer Nut (6), welche von wenigstens einem sich um einen Bohrerkern (7) wendelförmig herumwindenden Wendelgang (5) ausgebildet wird, wobei innerhalb der Nut (6) eine Vielzahl sich radial nach aussen erstreckende Noppen (9) ausgebildet sind, welche teilweise in den Nutquerschnitt eindringen, **dadurch gekennzeichnet, dass** die Noppen (9) ausschliesslish vom Grund der Nut (6) ausgebildet sind.

2. Wendelbohrer nach Anspruch 1, **dadurch gekennzeichnet, dass** die Noppen (9) die Hüllkurve (8) nicht erreichen.

3. Wendelbohrer nach einem der vorherigen Ansprüche, **dadurch gekennzeichnet, dass** die Noppen (9) aus dem selben Material wie der Bohrerkern (7) des Wendelbohrers (1) bestehen.

4. Wendelbohrer nach einem der vorherigen Ansprüche, **dadurch gekennzeichnet, dass** die einzelnen Noppen (9) prismatisch kompakt ausgeformt sind.

5. Wendelbohrer nach einem der vorherigen Ansprüche, **dadurch gekennzeichnet, dass** alle Noppen (9) die selbe Grösse haben.

6. Wendelbohrer nach einem der vorherigen Ansprüche, **dadurch gekennzeichnet, dass** die einzelnen Noppen (9) eine radiale Höhe von 1/4 der Nuttiefe, eine Breite von 1/4 und eine Länge von einem Ganzen der Nutbreite aufweisen.

7. Wendelbohrer nach einem der vorherigen Ansprüche, **dadurch gekennzeichnet, dass** der Abstand zwischen jeweils benachbarten Noppen (9) gleich der Länge der Noppen (9) ist.

8. Wendelbohrer nach einem der vorherigen Ansprüche, **dadurch gekennzeichnet, dass** die Vielzahl der Noppen (9) entlang einer Linie längs der Nut (6) angeordnet sind.

9. Wendelbohrer nach einem der Ansprüche 1 bis 7, **dadurch gekennzeichnet, dass** die Vielzahl der Noppen (9) versetzt zu einer Linie längs der Nut (6) angeordnet sind.

## Claims

1. Twist drill (1) for rock, having a helix (4) with at least one groove (6) constructed from at least one helical thread (5) winding helically around a drill core (7), a multiplicity of radially outwardly extending protuberances (9) being formed within the groove (6) which partially penetrate into the groove cross section, **characterised in that** the protuberances (9) are constructed extending exclusively from the root of the groove (6).

2. Twist drill according to claim 1, **characterised in that** the protuberances (9) do not reach the envelope (8).

3. Twist drill according to one of the preceding claims, **characterised in that** the protuberances (9) consist of the same material as the drill core (7) of the twist drill (1).

4. Twist drill according to one of the preceding claims, **characterised in that** the individual protuberances (9) are formed prismatically compact.

5. Twist drill according to one of the preceding claims, **characterised in that** all the protuberances (9) are of the same size.

6. Twist drill according to one of the preceding claims, **characterised in that** the individual protuberances (9) have a radial height of 1/4 of the groove depth, a width equal to 1/4 and a length equal to the full width of the groove width.

7. Twist drill according to one of the preceding claims, **characterised in that** the distance between respective neighbouring protuberances (9) equals the length of the protuberances (9).

8. Twist drill according to one of the preceding claims, **characterised in that** the multiplicity of protuberances (9) are arranged along a line that extends longitudinally of the groove (6).

9. Twist drill according to one of claims 1 to 7, **characterised in that** the multiplicity of protuberances (9) are arranged offset with respect to a line that extends longitudinally of the groove (6).

## Revendications

1. Foret hélicoïdal (1) pour roche, avec une hélice (4) pourvue d'au moins une rainure (6) formée par au moins un filet hélicoïdal (5) s'enroulant en hélice autour d'une âme de foret (7), dans lequel, à l'intérieur de la rainure (6), est réalisée une pluralité de plots (9) qui s'étendent radialement vers l'extérieur et qui pénètrent partiellement dans la section transversale de la rainure, **caractérisé en ce que** les plots (9) sont réalisés exclusivement à partir du fond de la rainure (6).

2. Foret hélicoïdal selon la revendication 1, **caractérisé en ce que** les plots (9) n'atteignent pas l'enveloppante (8).

3. Foret hélicoïdal selon une des revendications précédentes, **caractérisé en ce que** les plots (9) sont constitués du même matériau que l'âme de foret (7) du foret hélicoïdal (1).

4. Foret hélicoïdal selon une des revendications précédentes, **caractérisé en ce que** les plots (9) présentent individuellement une forme prismatique compacte.

5. Foret hélicoïdal selon une des revendications précédentes, **caractérisé en ce que** tous les plots (9) ont 1a même dimension.

6. Foret hélicoïdal selon une des revendications précédentes, **caractérisé en ce que** les plots (9) présentent individuellement une hauteur radiale égale à 1/4 de la profondeur de rainure, une largeur égale à 1/4 et une longueur égale à la largeur totale de la rainure.

7. Foret hélicoïdal selon une des revendications précédentes, **caractérisé en ce que** la distance entre des plots voisins (9) est égale à la longueur des plots (9).

8. Foret hélicoïdal selon une des revendications précédentes, **caractérisé en ce que** la pluralité de plots (9) est disposée suivant une ligne longitudinale à la rainure (6).

9. Foret hélicoïdal selon une des revendications 1 à 7, **caractérisé en ce que** la pluralité de plots (9) est disposée de manière décalée par rapport à une ligne longitudinale à la rainure (6).
